# EUROPEAN PATENT SPECIFICATION

(11) **EP 4 303 129 B1**
(45) Date of publication and mention of the grant of the patent: **05.11.2025**
(21) Application number: 23184304.6
(22) Date of filing: 07.07.2023
(51) Int. Cl.: B64G 1/00, B64G 1/22, B64G 1/64

(54) **SYSTEMS, ASSEMBLIES AND METHODS FOR PAYLOAD TESTING**
SYSTEME, ANORDNUNGEN UND VERFAHREN ZUR NUTZLASTPRÜFUNG
SYSTÈMES, ENSEMBLES ET PROCÉDÉS DE TEST DE CHARGE UTILE

(30) Priority: 08.07.2022 GB 202210042
(43) Date of publication of application: 10.01.2024
(73) Proprietor: Gravitilab Aerospace Services Limited, Kettering Northamptonshire NN16 8NQ (GB)
(72) Inventor: ADLARD, Rob, Kettering, NN16 8NQ (GB); ROLFE, Calum, Kettering Northamptonshire NN16 8NQ (GB); MCNEIL, Aaron, Kettering Northamponshire NN16 8NQ (GB)
(74) Representative: K2 IP Limited

(56) References cited:
- WO-A1-2021/181401
- US-A- 4 213 586
- US-A- 6 142 424
- US-A1- 2017 327 252
- US-A1- 2022 041 306
- US-B1- 10 214 303

## Description

### FIELD OF THE INVENTION

This invention is directed to systems, assemblies and methods for payload testing, in particular for payload testing for spacecraft, for example suborbital spacecraft.

### BACKGROUND OF THE INVENTION

Testing of payloads and components intended for spacecraft is increasing in importance in applications for orbital, outer space and planetary science, exploration and commercialisation. Such testing typically aims to simulate one or more of the environmental and movement conditions experienced by payloads during launch, flight, orbit, spaceflight, re-entry to an atmosphere and landing/recovery.

For example, environmental conditions during suborbital, orbital and spaceflight can include extremes of temperature, radiation exposure, exposure to the vacuum of space, and the like. Payloads may experience micro-gravity conditions (for example, in orbital environments), or lower-than-Earth gravity conditions, such as may be experienced on the lunar surface or on the surface of planetary bodies. During launch and other manoeuvres, the payload may experience extreme g-forces and vibration, for example. Simulated conditions or environments can be used to test components or devices, or to perform experiments in those conditions, without having to use the environment itself, for example by incurring the expense of putting the component or experiment itself in orbit or full spaceflight.

Systems for payload or component testing are known to the art. For example, WO2021/181401 discloses a launch system including a composite vehicle and a carrier vehicle. The composite vehicle includes a payload vehicle, a booster vehicle and a first coupling system. The payload vehicle is configured for powered spaceflight at least in a space medium, and includes a rocket driven propulsion system. The first coupling system is configured for selectively coupling and decoupling the payload vehicle with respect to the booster vehicle. The carrier vehicle is configured for transporting the composite vehicle to at least a first altitude from a ground location. The launch system also includes a second coupling system for selectively coupling and decoupling the composite vehicle with respect to the carrier aircraft.

US6142424 discloses a method of steering a vehicle including a propulsion system and a jettisonable nose cone containing a payload, in which during the trajectory of the vehicle, the propulsion thrust of the vehicle is temporarily interrupted in order to allow the jettisonable nose cone to be ejected.

Terrestrial based systems for exposing payloads to environmental conditions can attempt to simulate temperature differences, radiation exposure or generate vacuum exposure. These systems may not be able to fully or accurately simulate a spaceflight environment, or may not be able to achieve such conditions at the same time or in the same test. Systems are available for attempting micro-gravity simulation, though many are inadequate for full micro-gravity testing, for sufficient time periods, let alone in combination with any simulated environmental conditions. Many payload testing systems do not include the capability to fully recover the intact test item

Payloads may also be tested on orbit, for example on an orbital spacecraft, or on an orbital platform such as the International Space Station. However, the costs for such testing are prohibitive for all but the very most valuable spacecraft and science programmes, and are typically not available to common commercial endeavours.

In addition, known payload testing or deployment systems can be cumbersome, limited by the operating mechanics of the spacecraft and/or fairing, and often do not efficiently use the capacity available to the spacecraft. Further, electronics systems for known payload systems can be inefficient in, for example, power supply and data acquisition.

The present invention aims to address these problems and provide improvements upon the known devices and methods.

### STATEMENT OF INVENTION

Aspects and embodiments of the invention are set out in the accompanying claims.

In general terms, one embodiment of the invention provides a suborbital vehicle assembly for payload testing, comprising: a housing for accommodating a test payload therein; and a payload exposure system coupled to the housing, operable to: open an aperture in the housing to allow exposure of a housed test payload to an in-flight environment; and close the aperture, wherein the payload exposure system comprises an actuator for opening and closing the aperture, wherein the actuator comprises a drive means, wherein the assembly comprises a first vehicle section, a second vehicle section, and an intermediary structure coupled between the first and second sections, wherein the payload exposure system comprises the intermediary structure and the drive means, wherein: in a closed configuration the first and second vehicle sections are coupled together; wherein the payload exposure system is operable in the closed configuration to separate the first and second vehicle sections to establish the aperture between the first and second vehicle sections in an open configuration; and wherein the payload exposure system is operable to retract the second vehicle section back to the first vehicle section to return the first and second vehicle sections to the closed configuration.

This assembly, for example including a (re)closable aperture on a suborbital test craft, allows a means for providing exposure to all facets of a space environment. Suitably, the actuator is a linear actuator, and an operative action of the actuator is in an axial direction of the vehicle assembly.

Optionally, the payload exposure system may be operable to extend the second vehicle section from the first vehicle section.

The assembly may comprise a seat means between the first and second vehicle sections. Opposing portions of the seat means disposed on the first and second vehicle sections may cooperate to seat the first vehicle section on the second vehicle section. In an embodiment where the housing is generally cylindrical, the seal and/or seat means may be generally annular.

Suitably, the intermediary structure comprises a modular payload support. Optionally, the payload exposure system is operable to, for example during a rotational manoeuvre of the vehicle, allow deployment of a payload from the modular payload support.

The housing may be configured to prevent deployment or enclose the payload during a or the manoueuvre. The payload system may be operable to allow the payload out of the aperture by means of removing a centripetal force. The removing may be opening the aperture.

### BRIEF DESCRIPTION OF THE DRAWINGS

The invention will now be described by way of example with reference to the accompanying drawings, in which:
Figures 1a, 1b, 2a and 3b are diagrams illustrating features of a vehicle assembly according to an embodiment of the invention;
Figure 3 is a diagram illustrating components of a system in a deployed arrangement according to an embodiment of the invention; and
Figure 4 is a diagram illustrating components of a system in a deployed arrangement with accommodated payloads according to an embodiment of the invention.

### DETAILED DESCRIPTION OF EMBODIMENTS

Embodiments of the invention allow efficient systems and methods for in-space, in-flight or in-orbit environmental testing of payload items in a spacecraft, by providing a means for opening and closing an aperture in the spacecraft; a payload housed inside the craft can therefore be exposed to the environmental conditions in the high atmosphere, in orbit or in outer space (for example). The aperture is closable, so that the payload can be re-sealed inside the spacecraft for recovery, for instance by re-entry into the Earth's atmosphere and landing.

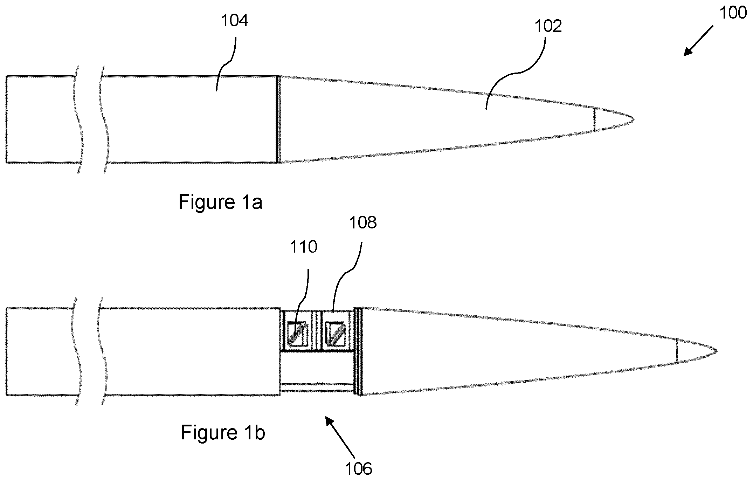

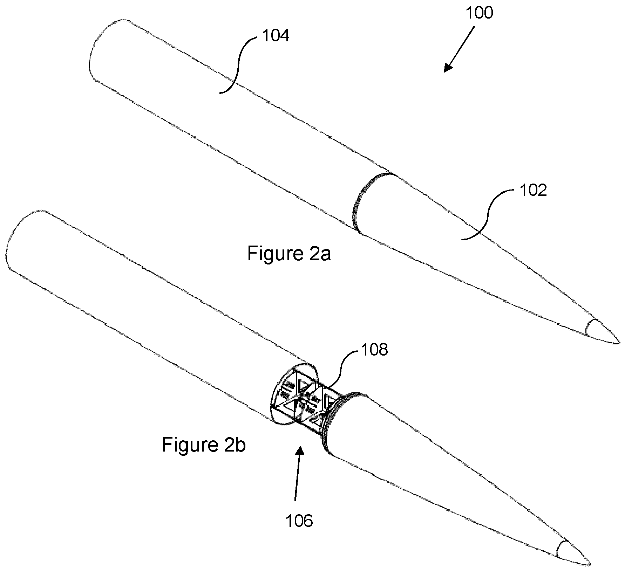

Figures 1a, 1b, 2a and 2b illustrate a vehicle assembly (100) according to an embodiment of the invention. The spacecraft has a housing, in this example made up of multiple sections. The housing in this case is of a spacecraft, although in embodiments the vehicle may be a suborbital vehicle reaching only the high atmosphere. In this example, the housing for the payload or payload items or components forms generally the outer surface of the vehicle - in other embodiments the vehicle launched or deployed may contain other housing components, or other sections or stages. In the example shown, the vehicle includes a means (not shown) for either launching or propelling the vehicle - for instance, the vehicle may be (or be a stage of) a rocket or similar craft launched from the Earth's or a planetary body surface.

In embodiments the vehicle is a sub-orbital vehicle; this allows the vehicle to reach heights above the atmosphere (over 100km, for example) in order to provide exposure to the environmental conditions of space (such as lower earth orbit (LEO)), whilst not requiring the vehicle, assembly or payload to be capable of entering orbit. In other embodiments, the vehicle may be an orbital vehicle, or the assembly may be a suborbital sub-section of a non-space vehicle, or alternatively of an orbital vehicle.

In this embodiment, the housing is divided into an upper nose section (102) generally conically shaped, and a cylindrical body section (104); the division point (106) is a generally annular central region of the assembly. These are of course typical of rocket craft; other similar shapes and dimensions are envisaged in embodiments.

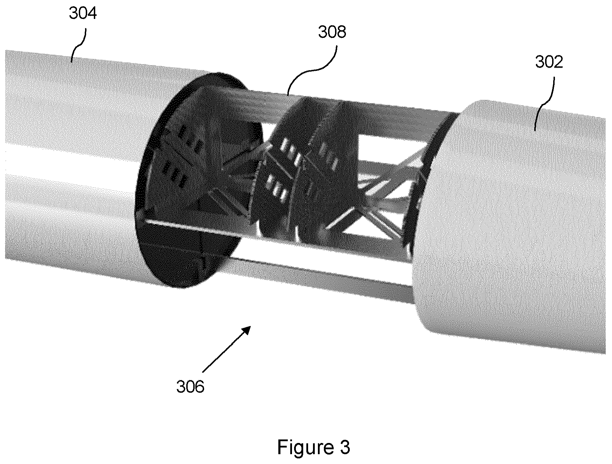

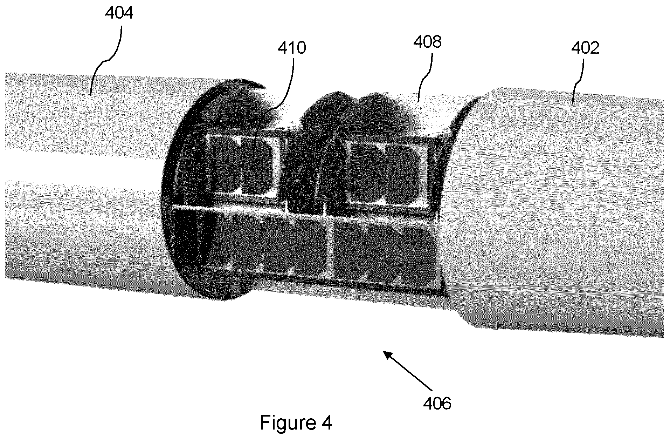

In this embodiment, an opening or aperture (106) can be opened or established by the linear and/or axial movement or extension or extrusion of the nose section away from the body. As can be seen, the now-separated sections are joined by an intermediary structure (108) of the vehicle. This intermediary structure in this embodiment provides a combination of functions: securing the two sections together in (or during) the extended (or extending) configuration; providing at least part of the means for driving the axial extension movement; and housing or securing the payload(s) (110). Figures 3 and 4 illustrate features of this intermediary structure and secured payloads, according to embodiments of the invention, in more detail.

This axial extension of the nose section allows for a simple mechanism and drive means, for example a simple ball screw mechanism with linear guides, to open and close the aperture. In addition, the aperture is accessible and/or exitable (for any deploying payload) around the entire circumference of the vehicle.

On retraction of the extended nose section, this section is brought back into contact with the body at the annular division, and seating features around this annular section cooperate to secure the nose section in place. In addition, locking features can be applied in the closed configuration, for example during launch and after re-closure, to secure the aperture shut. The annular section includes a sealing element, in this embodiment an o-ring, in order to seal the payload bay while closed.

It should be noted that in other embodiments alternative means can be provided for providing the opening or aperture in the spacecraft. For example, in one other embodiment, a more traditional clam-shell fairing may be provided, in which two half sections of a nose section may be opened away from each other, exposing an enclosed payload, and provided with drive means to return the clam-shell halves back towards each other to re-enclose the payload. In another embodiment, an outer housing is provided with an opening or aperture, and an inner housing is provided with a corresponding aperture, above a housed payload. In a closed configuration the apertures are disposed at separate positions circumferentially around the vehicle; for the open configuration, the inner housing can be rotated inside the outer housing, in order to align the two apertures. This arrangement provides the advantage that no moving parts are present on the circumference of the launch vehicle.

It should be noted that the embodiment pictured in Figures 1a to 2b and described herein may have the advantages over this and other alternative systems of providing a simple mechanism for providing an opening, with as few moving parts as possible. This prevents or minimises failure modes for the spacecraft, both in deployment, and in surviving launch and re-entry intact. For example, the annular nature of the opposing sections of the opening may be much more easily and reliably seated and sealed on the body on retraction of the extruded nose section, than similar closing or sealing sections in alternative systems.

One goal of embodiments of the invention is to create a payload bay which is capable of exposing a high proportion of the on-board payloads to the space environment, and then be configurable to either deploy the exposed payloads or re-integrate them into the launch vehicle fuselage for safe return and recovery. Features of the payload structure are also able to reduce integration time, improve electric power and data storage capability and increase the available volume for a given payload mass. With regards to improving the packing efficiency, the payload section uses a more spatially efficient standardised payload format, in addition to more bespoke payload formats as may be required to suit specific user hardware requirements / characteristics.

Referring additionally to Figures 3 and 4, illustrating the intermediary payload securing structure (308, 408) in more detail, instead of traditional 'U' payload module units, features of embodiments of the invention use wedge-shaped 'slices' of hemispheres or quadrants. This improves packing efficiency and available volume.

One feature of embodiments is that the payload structure is segmented through the centre of the module by supporting 'panes'. These can for example accommodate up to four 10 x 10mm Cubesat payloads across a cross section. Alternatively, one hemisphere can instead be comprised of a single pane, so that a payload with a 20mmx10mm cross section (such as a 6U Cubesat) can be integrated. The panes are modular, and combine to give the structure internal rigidity by slotting into grooves on the ends of the payload area (306, 406). They are then supported by 3-4 guide rails at the cardinal points along the circumference of the payload module.

In this way, payloads (410) within the payload bay can be retained internally along the central surfaces of the payload integration structure. Note that payloads can also be retained axially on rolling surfaces, so that powered deployment can be integrated to each payload module.

As noted above, in some embodiments, the payload structure may be used to deploy payload items, in addition to testing items during flight (and/or in addition to retaining and returning some of the payload items or components on any given flight). Thus in one alternative embodiment, actuation or deployment of payloads once the payload bay is exposed can be achieved using the centripetal force of the spinning launch vehicle, with the rollers in this instance acting as passive guides. In this embodiment, in the closed or stowed configuration, while the vehicle rotates during launch or flight, the payload items are retained by the inner surface of the housing of the body of the vehicle, rather than being fixed or secured onto the payload structure. Therefore once the extrusion of the nose section exposes the payload structure as usual, these payload items are no longer secured, and the rotational motion of the vehicle combined with (now) the lack of centripetal force exerted by the inner housing of the body, allows these payload items to move away from the payload structure and thus be deployed from the vehicle.

In embodiments, rails of the extrusion structure also serve as electrical conduits, so that an electrical power source and wired data transmission lines can be transferred to all four quadrants. The lower (and possibly upper) rail can be used to actuate the payload along the axis of the launch vehicle, using a common linear actuation method such as rack and pinion, hydraulics or a spring loaded system which enables the bay to fail shut. A locking mechanism can be used to retain the payload bay inside the launch vehicle airframe during the launch and recovery phases of flight. It should also be noted that, during flight, the structural rigidity, aerothermal protection and strength in compression are primarily handled by the external tube of the launch vehicle.

The grooves cut into the ends of the pane units are present to allocate rollers, which can then be actuated electrically to deploy the payload for a deployment mission once it is exposed to the space environment. Alternatively, the grooves can accommodate clasps, which can then retain the payload for an exposure-and-return mission or in embodiments as noted above release them at apogee using the centripetal force of a spinning launch vehicle for a deployment mission. The central slit between these grooves houses a guide flange attached to the payload, ensuring that the payload deploys on a 45 degree angle and thus avoids the obstruction of the payload guide rails.

In more typical embodiments in which the payload items are for testing without deployment, i.e. purely in microgravity or through an exposure-and-return mission, in embodiments they can make use of a greater proportion of the payload area by using a 'slice' payload unit. A slice unit affords a greater volume of payload for the same packing volume within the launch vehicle, by as much as 30%. Although the slice format would have to integrate into the payload pane prior to sliding the pane into the bay itself, it would still be accessible during later stages of the launch sequence (up to the point of payload stowaway and locking).

In embodiments of the invention, in contrast with previously considered systems, power can be provided by the vehicle to the payloads, rather than each payload requiring its own power source. In embodiments, power is shared between payloads through the modular housings which connect structurally and electronically as standard. In embodiments, data acquisition can also be provided as an on-board feature of the vehicle, rather than requiring the payload items to provide this. Power and data acquisition components of the vehicle can be accommodated in a separated/sealed section of the body, below the section of the body which accommodates the extendable payload structure.

Mission profiles for testing and possible deployment, for a variety of different payloads, will of course vary. As an example, a payload bay might be taken up by 8 payload customer, 2 of whom are wishing to deploy their Cubesat payload, 2 of whom wish to expose their payload to the space environment, and 4 of whom have bespoke payloads in a 'slice' format, and simply require access to microgravity conditions. The latter customer may in addition seek to minimise the amount of environmental exposure that their payloads are subjected to. Given the modularity available from the internally retained, axially extruded payload design approach, embodiments of the invention can accommodate all of these customers.

Integration of the payloads to the airframe during the pre-launch sequence can be simple and easy due to the 360 degree access afforded by the linear extension feature. In embodiments, the actuation along the axis to expose the payload structure can be limited to only part actuation or extension, so that an upper portion of the payload bay is exposed to the space environment, ensuring that the lower section is kept within the vehicle airframe. 2 Cubesat payloads can be deployed whilst retaining the payloads of the customers that wished to undertake an exposure-and-return mission. The drive mechanism can then be actuated to return back to the closed position and re-seal the payload bay prior to re-entry to the atmosphere.

Note that in sub-orbital embodiments, given the trajectory and altitude of the parabolic arc of a suborbital rocket, the data collection point takes place in an environment with no air resistance and at relatively low velocities (thus lower inertial forces) compared to the rest of the flight environment. As such, provided that a suitable locking mechanism is used which protects the actuation system from loading and vibrations prior to apogee, the actuation mechanism can operate during the data collection phase of a mission, and need only operate within this environment.

It will be appreciated by those skilled in the art that the invention has been described by way of example only, and that a variety of alternative approaches may be adopted without departing from the scope of the invention as defined by the claims.

## Claims

1. A suborbital vehicle assembly (100) for payload testing, comprising:
a housing (102, 104) for accommodating a test payload (110) therein; and
a payload exposure system (108) coupled to the housing, operable to: open an aperture (106) in the housing to allow exposure of a housed test payload to an in-flight environment; and close the aperture,
wherein the payload exposure system comprises an actuator for opening and closing the aperture,
wherein the actuator comprises a drive means (108),
wherein the assembly comprises a first vehicle section (102), a second vehicle section (104), and an intermediary structure (108) coupled between the first and second sections,
**characterised in that**
the payload exposure system comprises the intermediary structure and the drive means, and wherein: in a closed configuration the first and second vehicle sections are coupled together; wherein the payload exposure system is operable in the closed configuration to separate the first and second vehicle sections to establish the aperture between the first and second vehicle sections in an open configuration; and wherein the payload exposure system is operable to retract the second vehicle section back to the first vehicle section to return the first and second vehicle sections to the closed configuration.

2. An assembly according to Claim 1, wherein the actuator is a linear actuator, and wherein an operative action of the actuator is in an axial direction of the vehicle assembly.

3. An assembly according to Claim 1, comprising sealing means between the first and second vehicle sections.

4. An assembly according to Claim 1 or Claim 3, wherein the intermediary structure comprises a modular payload support (306, 406).

5. An assembly according to Claim 4, wherein the payload exposure system is operable to, during a rotational manoeuvre of the vehicle, allow deployment of a payload from the modular payload support.

## Patentansprüche

1. Suborbitale Fahrzeuganordnung (100) zur Nutzlastprüfung, die Folgendes umfasst:
ein Gehäuse (102, 104) zur Unterbringung einer Prüfnutzlast (110); und
ein mit dem Gehäuse gekoppeltes Nutzlast-Expositionssystem (108), das betreibbar ist zum: Öffnen einer Apertur (106) in dem Gehäuse, um die Exposition einer eingehausten Prüfnutzlast gegenüber einer Umgebung während des Fluges zu ermöglichen; und Schließen der Apertur,
wobei das Nutzlast-Expositionssystem einen Aktuator zum Öffnen und Schließen der Apertur umfasst,
wobei der Aktuator ein Antriebsmittel (108) umfasst,
wobei die Anordnung einen ersten Fahrzeugabschnitt (102), einen zweiten Fahrzeugabschnitt (104) und eine Zwischenstruktur (108) umfasst, die zwischen dem ersten und dem zweiten Abschnitt gekoppelt ist,
**dadurch gekennzeichnet, dass** das Nutzlast-Expositionssystem die Zwischenstruktur und das Antriebsmittel umfasst,
und wobei: in einer geschlossenen Konfiguration der erste und der zweite Fahrzeugabschnitt miteinander gekoppelt sind; wobei das Nutzlast-Expositionssystem in der geschlossenen Konfiguration betreibbar ist, um den ersten und den zweiten Fahrzeugabschnitt zu trennen, um die Apertur zwischen dem ersten und dem zweiten Fahrzeugabschnitt in einer offenen Konfiguration herzustellen; und wobei das Nutzlast-Expositionssystem betreibbar ist, um den zweiten Fahrzeugabschnitt zum ersten Fahrzeugabschnitt zurückzuziehen, um den ersten und den zweiten Fahrzeugabschnitt in die geschlossene Konfiguration zurückzubringen.

2. Anordnung nach Anspruch 1, wobei der Aktuator ein Linearaktuator ist und wobei eine Betriebswirkung des Aktuators in einer axialen Richtung der Fahrzeuganordnung erfolgt.

3. Anordnung nach Anspruch 1, umfassend Dichtungsmittel zwischen dem ersten und dem zweiten Fahrzeugabschnitt.

4. Anordnung nach Anspruch 1 oder Anspruch 3, wobei die Zwischenstruktur eine modulare Nutzlasthalterung (306, 406) umfasst.

5. Anordnung nach Anspruch 4, wobei das Nutzlast-Expositionssystem betreibbar ist, um während eines Drehmanövers des Fahrzeugs die Bereitstellung einer Nutzlast von der modularen Nutzlasthalterung aus zu ermöglichen.

## Revendications

1. Assemblage de véhicule suborbital (100) pour essais de charge utile, comprenant :
un logement (102, 104) dans lequel abriter une charge utile de test (110) ; et
un système d'exposition de charge utile (108) couplé au logement, pouvant être utilisé pour : ouvrir une ouverture (106) dans le logement et permettre ainsi d'exposer une charge utile de test intégrée au logement à un environnement de vol ; et pour fermer l'ouverture,
dans lequel le système d'exposition de charge utile comporte un actionneur d'ouverture et de fermeture de l'ouverture,
dans lequel l'actionneur est doté d'un moyen d'entraînement (108),
dans lequel l'assemblage comporte une première section de véhicule (102), une seconde section de véhicule (104) et une structure intermédiaire (108) couplée entre les première et seconde sections,
**caractérisé en ce que** le système d'exposition de charge utile comprend la structure intermédiaire et le moyen d'entraînement,
et dans lequel : lorsque dans une configuration fermée, les première et seconde sections du véhicule sont couplées l'une à l'autre ; dans lequel le système d'exposition de charge utile peut être utilisé dans la configuration fermée pour séparer la première section de la seconde section du véhicule afin de mettre l'ouverture présente entre les première et seconde sections du véhicule dans une configuration ouverte ; et dans lequel le système d'exposition de charge utile peut être utilisé pour rétracter la seconde section du véhicule sur la première section du véhicule pour ramener les première et seconde sections du véhicule dans la configuration fermée.

2. Assemblage selon la revendication 1, dans lequel l'actionneur est un actionneur linéaire, et dans lequel une action opérationnelle de l'actionneur a lieu dans le sens axial de l'assemblage du véhicule.

3. Assemblage selon la revendication 1, comprenant des moyens d'étanchéité entre les première et seconde sections du véhicule.

4. Assemblage selon soit la revendication 1, soit la revendication 3, dans lequel la structure intermédiaire comprend un support de charge utile modulaire (306, 406).

5. Assemblage selon la revendication 4, dans lequel le système d'exposition de charge utile peut être utilisé, lors d'une manœuvre de rotation du véhicule, pour permettre le déploiement d'une charge utile depuis le support de charge utile modulaire.
